# EUROPEAN PATENT APPLICATION

(11) **EP 2 230 199 A1**
(43) Date of publication of application: **22.09.2010**
(21) Application number: 10005246.3
(22) Date of filing: 02.01.2008
(51) Int. Cl.: B65G 69/28

(54) **Smooth transition dock leveler lip**

(30) Priority: 02.02.2007 US 670742
(62) Divisional of application: 08713421.9
(71) Applicant: Rite-Hite Holding Corporation, Milwaukee, WI 53223 (US)
(72) Inventor: Andersen, Jonathan, Racine WI 53406 (US); Bublitz, Eric D., Milwaukee WI 53219 (US); Hahn, Norbert, Franklin WI 35132 (US); Holm, Dave, Kewaskum WI 53040 (US); McNeill, Matthew C., Mequon WI 53092 (US); Muhl, Tim, Slinger WI 53086 (US); Nelson, Kyle E., Cedarburg WI 53012 (US); Stone, Bradley J., Port Washington WI 53074 (US); Sveum, Matt, Wauwatosa Wisconsin (US)
(74) Representative: Samson & Partner

(57) **Abstract**

The invention provides a dock leveler (12) comprising a deck (16) that includes a front edge (22) and a rear edge (20), the deck is pivotal about the rear edge (20) to selectively raise and lower the front edge (22); and a lip assembly (26) comprising a main piece (26e,26g,26h,26k) and a leading edge piece (98), the main piece (26e,26g,26h,26k) is pivotally coupled to the front edge (22) of the deck (16), the leading edge piece (98) is deflectively coupled to the main piece (26e,26g,26h,26k).

## Description

### Field of the Disclosure

The subject disclosure generally pertains to dock levelers and more specifically to a transitional lip extending from the deck of a dock leveler.

### Background of Related Art

A typical loading dock of a building includes an exterior doorway with an elevated platform for loading and unloading vehicles such as trucks and trailers. Many loading docks have a dock leveler to compensate for a height difference that may exist between the loading dock platform and an adjacent bed of a truck or trailer. A dock leveler usually includes a deck that is hinged along its back edge so that the deck can pivotally adjust the height of its front edge to an elevation that generally matches the height of the rear edge of the truck or trailer bed.

In addition, usually a front hinge pivotally connects an extension plate or lip to the front edge of the deck. The front hinge allows the lip to pivot between a stored, pendant position and an extended, operative position. In the extended position, the lip can rest upon the trailer bed to form a bridge between the deck and the bed. This allows personnel and material handling equipment, such as a forklift truck, to readily move on and off the trailer during loading and unloading operations.

Often, the leading edge of the lip that rests upon the trailer bed is beveled to create a miniature ramp that minimizes physical shock to material handling equipment as their wheels travel over that leading edge. Nonetheless, the lip's leading edge and the rest of the lip can still jar the moving equipment and its driver. The magnitude of the jolt is a function of numerous factors including, but not limited to, the lip's thickness, the geometry of the lip's leading edge, the lip-to-deck crown angle (angle between the upper surfaces of the lip and the deck), angle between the upper surfaces of the lip and the trailer bed, height differential between the trailer bed and the loading dock's elevated platform, the hardness and diameter of the material handling equipment's wheels, the material handling equipment's suspension, the speed of the material handling equipment as it passes over the lip's leading edge, the combined weight of the material handling equipment and the load it is carrying, and the suspension of the trailer being loaded or unloaded of its cargo.

Some of the shock occurring at the lip might be reduced by providing a dock leveler with a crown angle that varies as a function of the deck's angle of inclination. Such a dock leveler is disclosed in US published patent application 2006/0150348A1. Although varying the crown angle might reduce the mechanical shock caused by the height differential between the truck bed and the dock's elevated platform, there are still many other shock-causing factors that could be addressed.

Consequently, a need exists for a better dock leveler that provides a smooth transition between the dock leveler's lip and a trailer bed upon which the lip is resting. Preferably, the dock leveler addresses a broad range of often uncontrollable factors that can reduce the smooth traveling of material handling equipment as the equipment travels between the dock leveler's lip and the trailer bed.

### Summary

In some examples, a dock leveler lip includes a curved leading edge to smoothen the transition between the lip and the top surface of a trailer bed.

In some examples, a dock leveler lip includes a shock absorbing polymeric element that minimizes mechanical shock and vibration to material handling equipment traveling over the lip.

In some examples, the shock absorbing polymeric element includes an interlocking feature that helps hold the element in place.

In some examples, a dock leveler includes an articulated lip.

In some examples, a dock leveler lip includes a plurality of flat, inclined surfaces that approximate a curved surface.

In some examples, a dock leveler lip includes a combination of flat and curved surfaces.

In some examples, a dock leveler lip includes a curved traffic-bearing surface so that the lip can terminate at a generally sharp leading edge without the lip being too thin at that area of the lip.

### Brief Description of the Drawings

FIG. 1 is a side view of a vehicle backing toward a dock leveler whose deck is at a stored, cross-traffic position.

FIG. 2 is a side view similar to FIG. 1 but showing the vehicle having already backed into the dock with the dock leveler moving into an operating position.

FIG. 3 is a side view similar to FIG. 2 but showing the dock leveler lowering its deck upon the vehicle's trailer bed.

FIG. 4 is a side view similar to FIG. 3 but showing the dock leveler in an operative position with a forklift traveling over the lip of the dock leveler.

FIG. 5 is a side view similar to FIG. 4 but showing the dock leveler engaging a higher trailer bed.

FIG. 6 is a side view similar to FIG. 4 but showing the dock leveler engaging a lower trailer bed.

FIG. 7 is a side view a dock leveler lip according to one embodiment.

FIG. 8 is a side view of a dock leveler lip according to a second embodiment.

FIG. 9 is a side view of a dock leveler lip according to a third embodiment.

FIG. 10 is a side view of a dock leveler lip according to a fourth embodiment.

FIG. 11 is a side view of a dock leveler lip according to a fifth embodiment.

FIG. 12 is a side view of a dock leveler lip according to a sixth embodiment.

FIG. 13 is a partially exploded perspective view of the dock leveler and lip of FIG. 12.

FIG. 14 is a side view of a dock leveler lip according to a seventh embodiment.

FIG. 15 is a side view similar to FIG. 14 but showing the lip engaging a higher trailer bed.

FIG. 16 is a side view similar to FIG. 14 but showing the lip engaging a lower trailer bed.

Figure 17 is a side view similar to Figure 14 but showing an alternate embodiment.

Figure 18 is a side view similar to Figure 11 but showing an alternate embodiment.

### Detailed Description

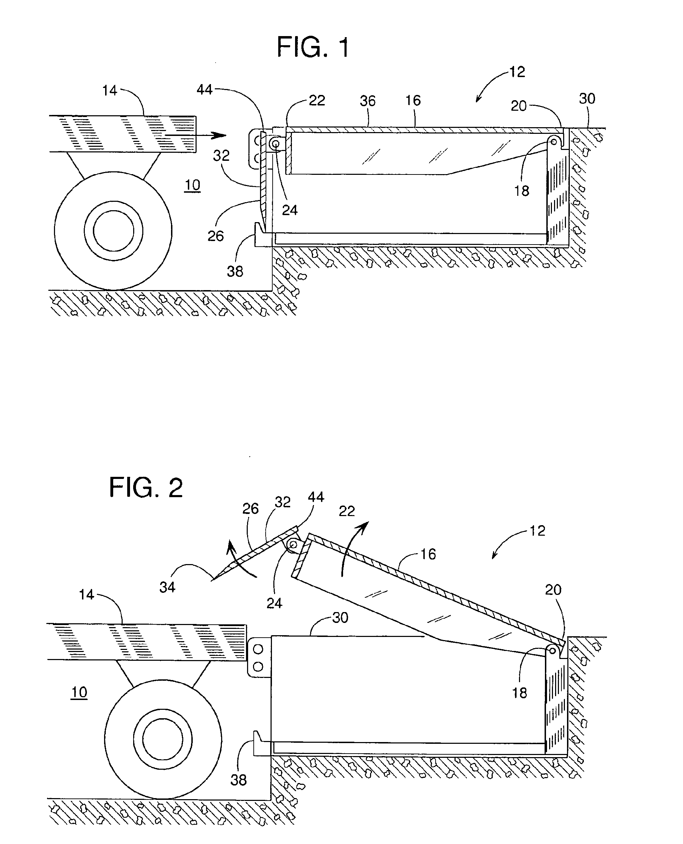

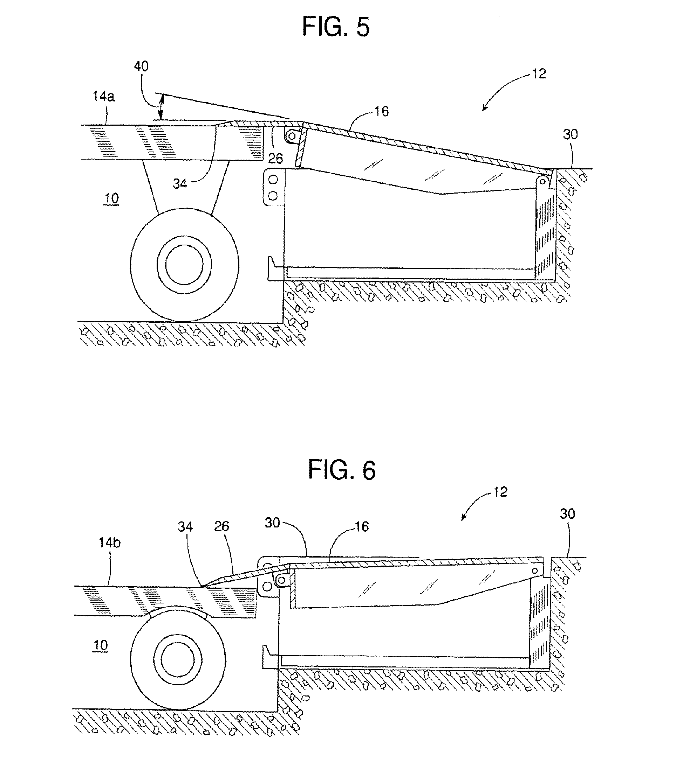

FIGS. 1 - 6 show a loading dock 10 with a dock leveler 12 for facilitating the loading and unloading of cargo on a trailer bed 14 or some other vehicle or truck bed. Dock leveler 12 includes a deck 16 that due to a rear hinge 18 can pivot about a rear edge 20 to adjust the height of its front edge 22 so that trailer bed 14 and the deck's front edge 22 can be at about the same height. Deck 16 can pivot over a range of positions including, but not limited to, a raised position (FIG. 2), a cross-traffic position (FIG. 1), and a below-dock position (FIG. 6).

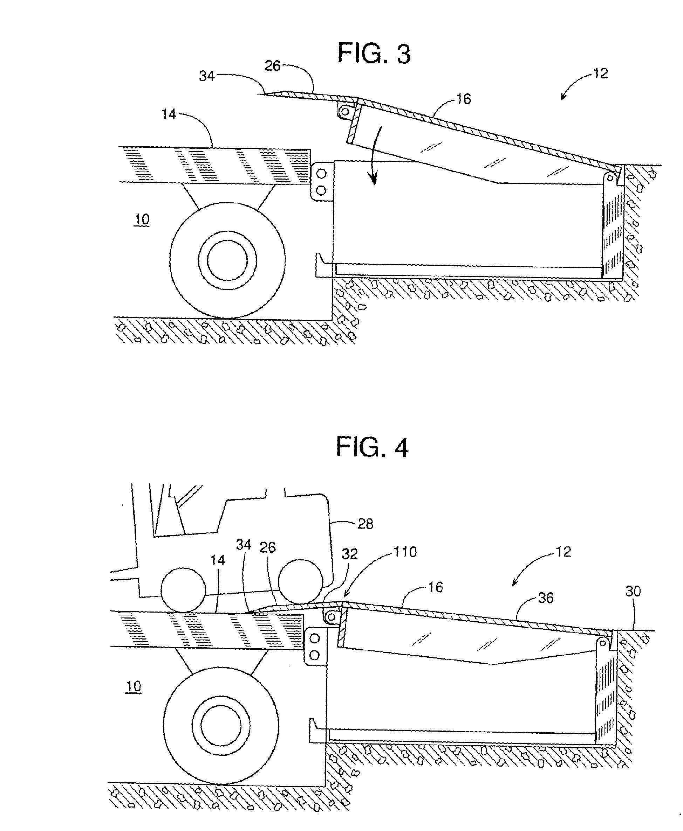

To bridge the gap between the deck's front edge 22 and the rear edge of trailer bed 14, a front hinge 24 pivotally couples a lip 26 to the deck's front edge 22. Lip 26 can pivot between an extended position (FIG. 3) and a pendant position (FIG. 1). Together, deck 16 and lip 26 provide a bridge over which a forklift 28 and other material handling equipment can travel between trailer bed 14 and an elevated platform 30 of dock 10.

As the forklift's wheels roll between trailer bed 14 and lip 26, forklift 28 and its driver may experience some jolting and vibration because the upper surface of trailer bed 14 and a traffic-bearing surface 32 of lip 26 are not perfectly coplanar. To minimize this vibration, a leading edge 34 of lip 26 includes one or more novel features that provide a smooth transition between trailer bed 14 and deck 16. These features have been designed while carefully considering the typical operation of a dock leveler.

In operation, trailer bed 14 is backed into the loading dock, as shown in FIG. 1. At this point, deck 16 is at its stored, cross-traffic position where a driveway surface 36 of deck 16 is generally flush with platform 30, and lip 26 is at its pendant position. In some cases, edge 34 of lip 26 rests upon a set of lip keepers 38 so that lip 26 can help support the weight of the deck at its cross-traffic position. In cases where the dock leveler does not include lip keepers, a pedestal installed underneath the deck can be used for supporting the deck's weight. An example of such a pedestal is disclosed in US patent 3,530,488.

Next, referring to FIG. 2, deck 16 rises and lip 26 swings out to extend edge 34 of lip 26 out over the top of trailer bed 14. Then, in FIG. 3, deck 16 descends to place the extended lip 26 upon trailer bed 14. The movement of lip 26 and deck 16 can be carried out in any of a wide variety of ways that are well known to those of ordinary skill in the art. The movement, for example, can be powered, manually driven, or a combination of the two. Mechanisms for moving deck 16 or lip 26 include, but are not limited to, hydraulic cylinder or bladder, pneumatic cylinder or bladder, mechanical linkage, drive screw, rack and pinion, winch, mechanical spring, gas spring, and various combinations thereof.

Once lip 26 is resting upon trailer bed 14, as shown in FIG. 4, forklift 28 can readily travel between platform 30 and trailer bed 14. The actual inclination of deck 16 and the angle between the upper surfaces of bed 14 and lip 26 is partially determined based on the relative heights of bed 14 and platform 30. FIG. 4, for instance, shows the deck's inclination when dock leveler 12 engages a trailer bed of moderate height, FIG. 5 shows dock leveler 12 engaging a relatively high trailer bed 14a, and Figure 6 shows a relatively low trailer bed 14b. Leading edge 34 being able to lie directly against trailer bed 14a even though bed 14a is higher than platform 30 is because the upper traffic-bearing surfaces of lip 26 and deck 16 are at a slightly positive crown angle 40 (about 5-degrees).

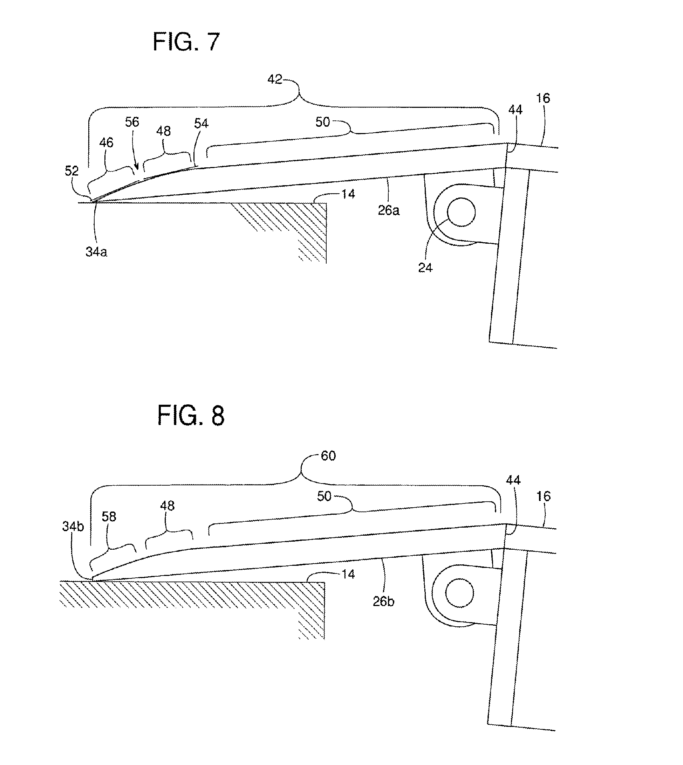

Although crown angle 40 ensures that the lip's leading edge 34 is resting directly upon trailer bed 14, the transition between edge 34 and bed 14 can still cause some vibration and jolting of forklift 28 and its driver. To minimize this vibration, a lip 26a can be provided with a smoothly curved or contoured traffic-bearing surface 42, as shown in FIG. 7. In this example, lip 26a has a leading edge 34a that is a substantially sharp line, which helps minimize any impact as a forklift wheel rolls from trailer bed 14 onto lip 26a. Traffic-bearing surface 42, which lies between leading edge 34a and a hinged edge 44, comprises a first approach surface 46, a second approach surface 48, and a final approach surface 50.

Due to the continuous curvature of the leading portion of bearing-surface 42, first approach surface 46 and second approach surface 48 are at an incline relative to each other. A tangent line 52 to first approach surface 46, for instance, lies at an angle (not parallel) to a line 54 that lies tangent to second approach surface 48, yet the two surfaces 46 and 48 smoothly blend due to a curved surface 56 between surfaces 46 and 48. In some cases, surfaces 46, 48 and 56 have the same radius and center of curvature.

In an alternate example, shown in FIG. 8, a lip 26b includes a more blunt leading edge 34b that might be more durable than a sharp edge. Leading edge 34b is a generally flat surface that lies at an angle (greater than zero degrees) relative to the lip's first approach surface 58. In this example, lip 26b has a traffic-bearing surface 60 that extends between leading edge 34b and hinged edge 44. Traffic bearing surface 60 comprises first approach surface 58, second approach surface 48, and final approach surface 50. Except for the slight difference between leading edges 34a and 34b, traffic bearing surfaces 42 and 60 are substantially the same.

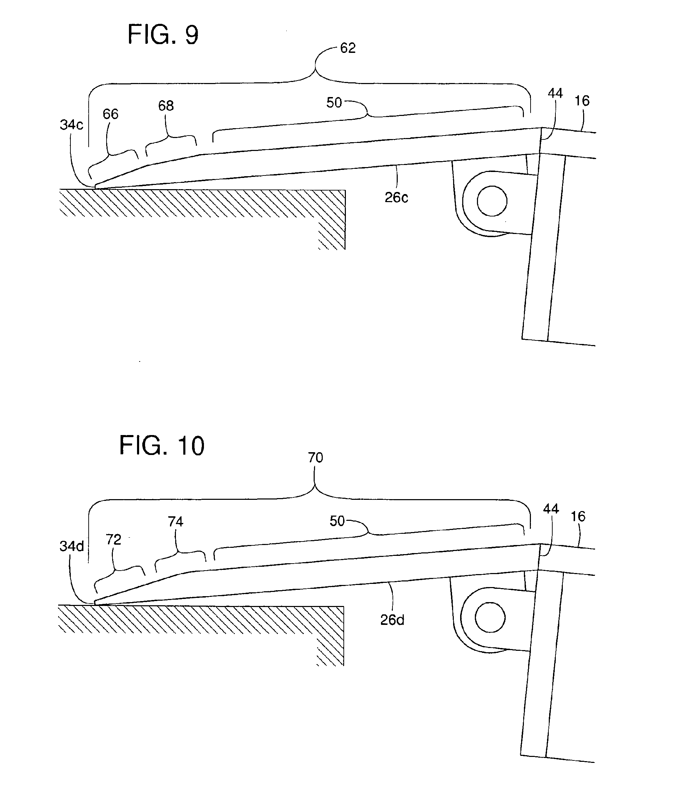

Because a curved surface can be more difficult to machine than a flat surface, Figure 9 shows an alternate lip 26c that includes a traffic-bearing surface 62 comprising a plurality of flat surfaces, which approximate the curved surfaces of lips 26a and 26b. Lip 26c includes a leading edge 34c similar to edge 34b (or similar to edge 34a). Traffic-bearing surface 62 of lip 26c extends from leading edge 34c to hinged edge 44. Surface 62 comprises a first approach surface 66, a second approach surface 68, and final approach surface 50. Each surface 66, 68 and 50 is substantially flat and lies at an incline relative to the others.

In another example, shown in FIG. 10, a lip 26d includes a leading edge 34d similar to edge 34c (or similar to edge 34a). A traffic-bearing surface 70 of lip 26d extends from leading edge 34d to hinged edge 44. Traffic bearing surface 70 comprises a substantially flat first approach surface 72, a curved second approach surface 74, and substantially flat final approach surface 50. Second approach surface 74 provides a smooth tangential transition between first approach surface 72 and final approach surface 50.

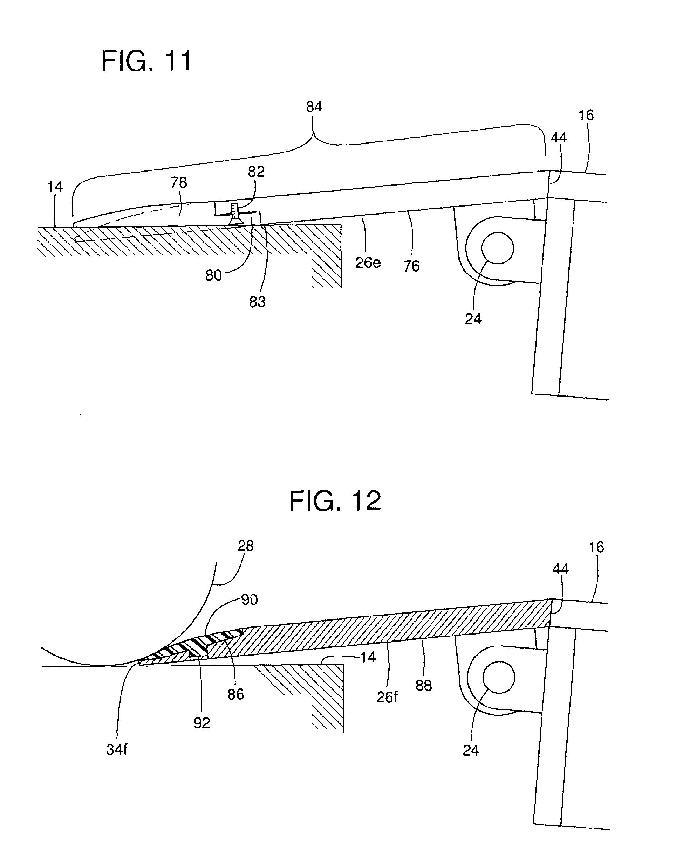

To create a more shock absorbing lip and/or to achieve a curved traffic-bearing surface without having to machine such a surface, a lip 26e can comprise a metal plate 76 to which a formed polymeric element 78 can be attached, as shown in FIG. 11. Element 78 can be attached in any suitable manner including, but not limited to, an adhesive 80, a threaded fastener 82, a rivet, and/or a mechanically interlocking feature (e.g., tongue-and-groove, plug-and-hole, etc.). Element 78 can be of any desired shape. In this particular example, element 78 is of a shape that provides a traffic-bearing surface 84 that is similar to surface 60 of FIG. 8. Element 78 can also be of any desired material, including but not limited to, neoprene rubber or polyurethane. Any suitable manufacturing process including, but not limited to, extrusion, plastic injection molding, and machining can produce element 78. Element 78 can be one continuous piece that extends the full width of deck 16, or element 78 can comprises a plurality of segments. The phantom lines of FIG. 11 illustrate the flexure of element 78 as a strong lower edge 83 of lip 26e rests firmly upon trailer bed 14. In addition to flexibility, element 78 may advantageously have shock or vibration absorption or dampening properties. Such properties would serve to minimize or eliminate vibration transmitted from the leveler to the forktruck operator resulting from contact therebetween and/or movement of the forktruck over the leveler, or at least the lip.

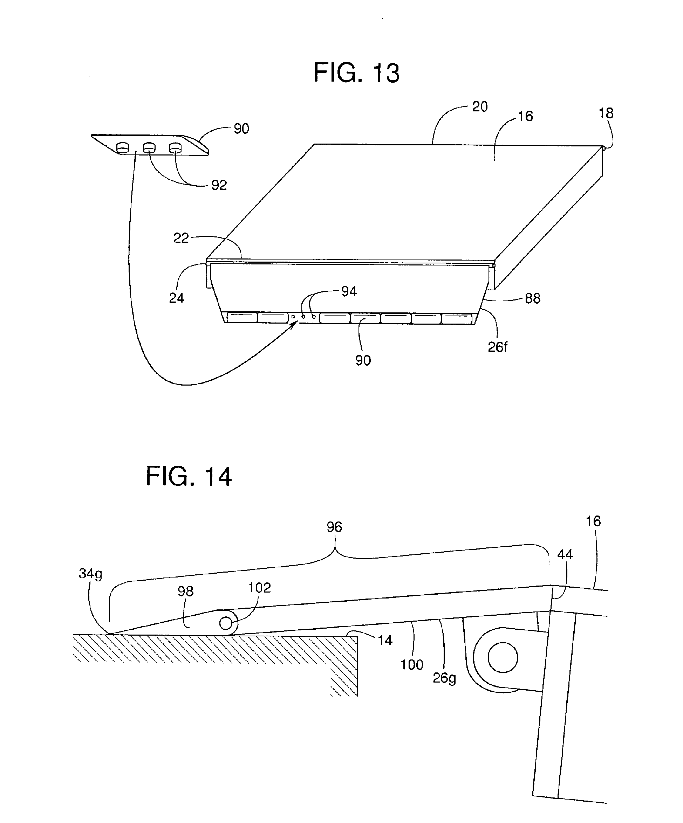

When a formed polymeric element or insert is used, the leading edge of the lip might be more durable if the underlying metal plate of the lip extends all the way to the tip of the lip. FIGS. 12 and 13, for example, show a lip 26f comprising a formed polymeric element 86 attached to a metal plate 88. Plate 88 extends fully to a leading edge 34f of lip 26f so that the strength of edge 34f is sufficient to support the weight of deck 16 when lip 26f is in its pendant position held by lip keepers 38 (FIG. 1). Element 86 can be comprised of a series of segments 90, which might make lip 26f easier to manufacture, ship and assemble. Moreover, worn segments could be replaced with new ones or their positions could be interchanged as some segments 90 in high traffic areas wear faster than others. Although element 86 could be attached in any suitable manner, such as those mentioned with reference to element 78 of FIG. 11, each segment 90 could include a plurality of plugs 92 that press-fit into a corresponding plurality of holes 94 in plate 88.

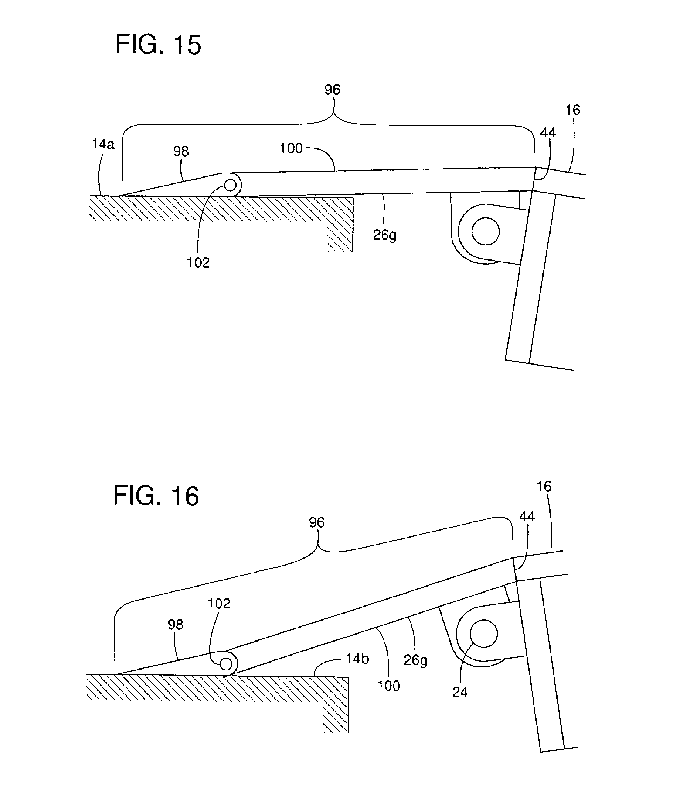

In another embodiment, shown in FIGS. 14, 15 and 16, an articulated lip assembly 26g comprises a metal or polymeric nose piece 98 that is pivotally attached to a metal plate 100 (main piece). A hinge 102 or pivotal connection between nose piece 98 and plate 100 allows piece 98 to lie generally flat against trailer bed 14 regardless of whether the trailer bed's elevation is high as shown in FIG. 15, low as shown in FIG. 16, or at an intermediate elevation as shown in FIG. 14. FIGS. 14, 15 and 16 generally correspond to FIGS. 4, 5 and 6 respectively. In this example, lip 26g includes a generally sharp leading edge 34g, and a traffic-bearing surface 96 extends between leading edge 34g and hinged edge 44. Although edge 34g is shown as a sharp edge, leading edge 34g could by of any shape including, but not limited to the shapes illustrated in FIGS. 7 - 13. Nose piece 98 can be one continuous piece that extends most of the full width of deck 16, or piece 98 can comprises two or more segments (plurality of leading edge pieces) that are distributed along plate 100 in a manner similar to the distribution of segments 90 of FIG. 13.

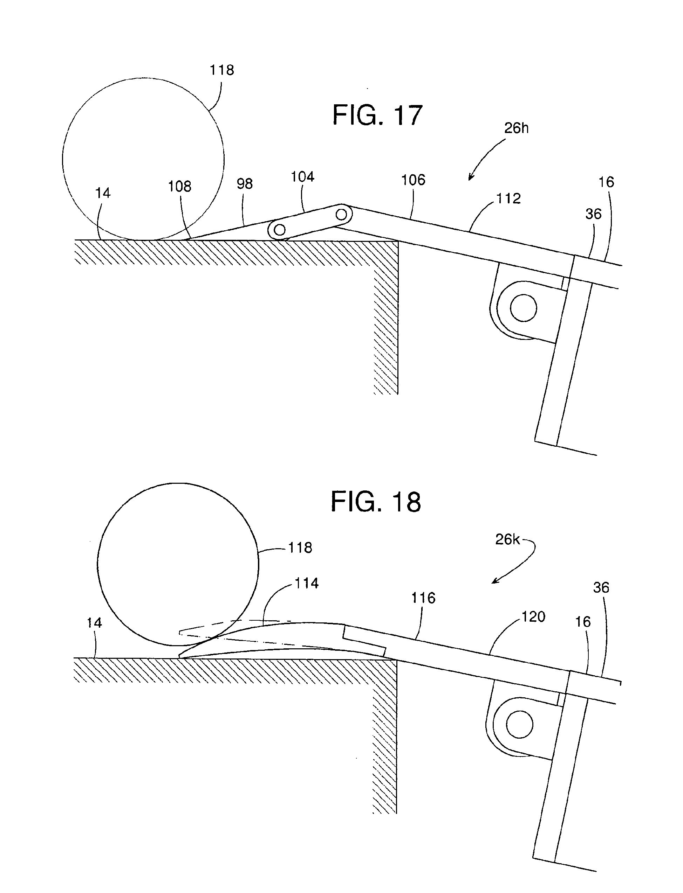

In some examples, as shown in FIG. 17, an articulated lip assembly 26h comprises nose piece 98, an intermediate link 104, and a main piece 106. The articulation of assembly 26h allows a leading edge 108 of nose piece 98 to rest upon trailer bed 14 even when bed 14 is higher than deck 16. Unlike many other dock levelers, this design does not require a crown angle where main piece 106 abuts the front edge of deck 16 (see crown angle 110 of FIG. 4). Instead, a main traffic surface 112 of main piece 106 is substantially coplanar with deck traffic surface 36 of deck 16. This is a significant advantage because crown angles can be difficult to produce and maintain.

Alternatively, FIG. 18 shows a lip assembly 26k where the articulated portion of assembly 26h of FIG. 17 is basically replaced by a flexible leading edge piece 114 similar to element 78 of FIG. 11. When trailer bed 14 is higher than deck 16, as shown in FIG. 18, a relatively stiff main piece 116 can rest solidly upon bed 14, while a wheel 118 from a forklift or other type of material handling equipment can deflect leading edge piece 114 down against bed 14, thereby providing wheel 118 with a generally smooth path to travel between bed 14 and deck 16. Again, this design does not require a crown angle where main piece 116 abuts the front edge of deck 16, thus a main traffic surface 120 of main piece 116 can be substantially coplanar with deck traffic surface 36 of deck 16.

It should be noted that leading edge piece 114 (FIG. 18), nose piece 98 (FIG. 17), and element 90 (FIG. 12) are all deflectively coupled to a main piece. The term, "deflectively coupled" refers to a connection between two pieces where some localized or total relative movement can occur between the two. Examples of such movement include, but are not limited to, resilient bending, resilient deformation, resilient localized compression, and pivotal movement.

Although the invention is described with respect to various examples, modifications thereto will be apparent to those of ordinary skill in the art. The scope of the invention, therefore, is to be determined by reference to the following claims.

## Claims

1. A dock leveler comprising:
a deck that includes a front edge and a rear edge, the deck is pivotal about the rear edge to selectively raise and lower the front edge; and
a lip assembly comprising a main piece and a leading edge piece, the main piece is pivotally coupled to the front edge of the deck, the leading edge piece is deflectively coupled to the main piece.

2. The dock leveler of claim 1, wherein the main piece is between the leading edge piece and the front edge of the deck.

3. The dock leveler of claim 1, wherein the leading edge piece includes a leading edge that is generally a sharp straight line, the leading edge is a portion of the leading edge piece that is farthest away from the main piece of the lip assembly.

4. The dock leveler of claim 1, further comprising a first hinge at the rear edge of the deck, a second hinge at the front edge of the deck, and a third hinge between the leading edge piece and the main piece of the lip assembly.

5. The dock leveler of claim 1, wherein the leading edge piece extends substantially a full length along the front edge.

6. The dock leveler of claim 1, wherein the lip assembly includes a plurality of leading edge pieces that are distributed along the main piece.

7. The dock leveler of claim 1, wherein the leading edge piece is at least partially comprised of a polymeric material.

8. The dock leveler of claim 1, wherein the leading edge piece includes a curved surface.

9. The dock leveler of claim 1, further comprising an adhesive that bonds the leading edge piece to the main piece.

10. The dock leveler of claim 1, further comprising a fastener that holds the leading edge piece in place.

11. The dock leveler of claim 1, wherein the leading edge piece includes an interlocking feature that helps hold the leading edge piece in place.

12. The dock leveler of claim 1, wherein the main piece has a main traffic surface, the deck has a deck traffic surface, and the main piece can pivot to a position where the main traffic surface and the deck traffic surface are substantially coplanar.

13. The dock leveler of claim 1, wherein the lip includes the leading edge, a hinged portion and a traffic-bearing surface extending therebetween, the hinged portion is pivotally coupled to the front edge of the deck such that the leading edge can move vertically relative to the front edge of the deck; and
a polymeric piece provides a least a portion of the traffic bearing surface.

14. The dock leveler of claim 1, wherein the leading edge piece of the lip assembly is pivotally coupled to the main piece such that the main piece is between the leading edge piece and the front edge of the deck.
